# EUROPÄISCHE PATENTANMELDUNG

(11) **EP 1 525 943 A2**
(43) Veröffentlichungstag der Anmeldung: **27.04.2005**
(21) Anmeldenummer: 04405085.4
(22) Anmeldetag: 16.02.2004
(51) Int. Cl.: B23Q 3/06, B24B 41/06

(54) **Bearbeitungsvorrichtung mit einer mehrere Aufnahmeeinheiten aufweisenden Haltevorrichtung zur Aufnahme von zu schleifenden bzw. geschliffenen Werkstücken und Haltevorrichtung**

(30) Priorität: 20.10.2003 EP 03405760
(71) Anmelder: J. Schneeberger Holding AG, 4914 Roggwil (CH)
(72) Erfinder: Schneeberger, Jürg, 4900 Langenthal (CH)
(74) Vertreter: Roshardt, Werner Alfred, Dipl.-Phys.

(57) **Zusammenfassung**

Die Bearbeitungsvorrichtung für zu schleifende Werkstücke hat eine Bearbeitungsstation sowie eine Haltevorrichtung **(1)**. Die Haltevorrichtung **(1)** hat mehrere Aufnahmeeinheiten **(3)** zur Aufnahme von zu schleifenden bzw. geschliffenen Werkstücken, welche jeweils einen Werkstückschaft **(5)** aufweisen. Jede Aufnahmeeinheit **(3)** hat eine Anschlageinheit **(11)** und eine Klemmeinheit **(13b)**. Es sind Werkstückschäfte **(5)** mit unterschiedlichen Durchmesserwerten **(7a-c)** in der Vorrichtung **(1)** aufnehmbar. Jeweils ein Werkstückschaft **(5)** ist zwischen eine Anschlageinheit **(11)** und eine Klemmeinheit **(13)** einer Aufnahmeeinheit **(3)** einbringbar. Jede Klemmeinheit **(13)** ist unabhängig von den Klemmeinheiten **(13)** der restlichen Aufnahmeeinheiten **(3)** gegen die Anschlageinheit **(11)**, den Werkstückschaft **(5)** fixierend, mit einer Haltekraft drückbar.

Aufgabe der Erfindung ist es, eine Bearbeitungsvorrichtung bzw. für diese eine Haltevorrichtung zur Aufnahme mehrerer zu schleifender bzw. geschliffener Werkstücke zu schaffen, in der ohne Voreinstellung Werkstücke mit beliebigen Schaftdurchmessern ablegbar sind.

## Beschreibung

### Technisches Gebiet

Die Erfindung betrifft eine Bearbeitungsvorrichtung gemäss dem Oberbegriff des Patentanspruchs 1 sowie eine Haltevorrichtung insbesondere für diese Bearbeitungsvorrichtung gemäss dem Oberbegriff des Patentanspruchs 2.

### Stand der Technik

Haltevorrichtungen, sogenannte Paletten, mit mehreren Aufnahmeeinheiten von Werkstücken, welche jeweils einen Werkstückschaft aufweisen, sind als sogenannte Lochplatten bekannt. Die Platten weisen Sackbohrungen mit ein- und demselben Durchmesser auf. In diese Sackbohrungen werden dann die, in der Regel automatisch, zu bearbeitenden Werkstücke mit ihrem Werkstückschaft zur Zwischen- oder Endablage eingesteckt.

Es sind auch Paletten bekannt, welche Aufnahmeeinheiten für Werkstückschäfte mit einstellbarem Durchmesser aufweisen. Jede Palette ist dann jeweils auf einen einzigen Schaftdurchmesser einstellbar. Ein einstellbarer Durchmesser ist durch gegeneinander verschiebbare Lochplatten mit quadratischen Durchbrüchen erreichbar. Die quadratischen Durchbrüche sind derart zueinander angeordnet, dass in Verschieberichtung die Diagonalen der quadratischen Durchbrüche vertikal übereinander liegen. Werden nun die Platten gegeneinander verschoben, so vergrössert oder verkleinert sich der freie Durchgang zwischen den sich teilweise überdeckenden Quadraten entsprechend dem gewünschten Schaftdurchmesser.

Es können auch Platten mit Sackbohrungen vorgesehen sein, deren Durchmesser unterschiedlich sind. Vorzugsweise werden dann die Sackbohrungen in Reihen angeordnet, wobei jeweils eine Reihe Sackbohrungen denselben Durchmesser aufweist.

Die bekannten Paletten lassen sich immer nur für genau definierte Schaftdurchmesser von zu schleifenden oder geschliffenen Werkstücken verwenden.

### Darstellung der Erfindung

### Aufgabe

Aufgabe der Erfindung ist es, eine Bearbeitungsvorrichtung mit einer Haltevorrichtung zur Aufnahme mehrerer zu schleifender bzw. geschliffener Werkstücke bzw. eine Haltevorrichtung zu schaffen, in der ohne Voreinstellung Werkstücke mit beliebigen Schaftdurchmessern ablegbar sind.

### Lösung

Die Lösung der Aufgabe erfolgt durch die Merkmale des Patentanspruchs 1 bzw. 2, indem eine Bearbeitungsvorrichtung für zu schleifende Werkstücke wenigstens eine Haltevorrichtung mit mehreren Aufnahmeeinheiten zur Aufnahme von zu schleifenden bzw. geschliffenen Werkstücken hat, wobei die Werkstücke jeweils einen Werkstückschaft aufweisen, und jede Aufnahmeeinheit für den Werkstückschaft eine Anschlageinheit und eine Klemmeinheit hat. Die Klemmeinheit ist bei der Aufnahme des Werkstücks durch dieses selbst gegen eine Haltekraft aufdrückbar ausgebildet. Der sich dann zwischen Anschlageinheit und Klemmeinheit befindende Werkstückschaft ist durch die Anschlageinheit und die Klemmeinheit mit der Haltekraft unabhängig von den restlichen Aufnahmeeinheiten fixiert.

Die Klemmeinheit wird man vorzugsweise derart ausbilden, dass sie einen in Richtung gegen das Anschlagelement mit der Haltekraft drückbaren Längsbereich hat, der am Werkstückschaft angreift. Die Verwendung eines Längsbereichs führt zu einer einfachen Konstruktion, welche eine Anpassung an beliebige Schaftdurchmesser erlaubt. Der Längsbereich muss nicht eine plane Fläche sein, er kann auch, insbesondere wenn die Klemmeinheit in sich elastisch verformbar ausgebildet ist, eine gekrümmte Fläche sein.

Um die Haltevorrichtung mit den Aufnahmeeinheiten einfach ausbilden zu können, kann die Klemmeinheit einen vorstehenden Verschiebeanschlag aufweisen. Durch ein an diesem Verschiebeanschlag anschlagenden Werkstückschaft, der z. B. durch einen Manipulator nach dem Schleifen zum Verschiebeanschlag transportiert wird, kann die Klemmeinheit gegen die Haltekraft bewegt werden. Die Bewegung wird man derart führen, dass der Schaft mit der Klemmeinheit von der Anschlageinheit weggeführt wird, damit sich ein Freiraum bildet, in den dann der Werkstückschaft eingebracht werden kann. Die Haltekraft hält dann den Werkstückschaft zwischen Anschlageinheit und Klemmeinheit, nachdem der Manipulator das Werkstück freigegeben hat.

Vorzugsweise wird man den Verschiebeanschlag nach oben vorstehend ausbilden. Der Manipulator kann dann das Werkstück derart führen, dass der untere Bereich des Werkstückschafts an dem Verschiebeanschlag anschlägt und durch eine entsprechende Bewegung ein Freiraum gebildet wird, in den dann der Schaft wenigstens teilweise eingeschoben wird.

Neben dem Verschiebeanschlag oder auch zusätzlich zu diesem, kann ein sich von aussen nach innen verjüngender Einlaufbereich an der Anschlag- und/oder der Klemmeinheit vorgesehen werden. Unter Verwendung dieses Einlaufbereichs kann ein von aussen in die Aufnahmeeinheit einzubringender Werkstückschaft die Klemmeinheit gegenüber der Anschlageinheit aufdrücken. Hierdurch ist nur ein einziger Bewegungsablauf, nämlich ein Absenken, notwendig, um ein Öffnen der Aufnahmeeinheit und ein Ablegen des Werkstückes zu erreichen.

Die Klemmeinheit und/oder die Anschlageinheit können einfache, vorzugsweise drei Haltepunkte für den Werkstückschaft aufweisen. Vorzugsweise wird man jedoch zwei zu einer Mantellinie des einzulegenden Werkstückschaftes parallele miteinander einen spitzen oder stumpfen Winkel einschliessende Anlageflächen verwenden. Durch den Ausdruck spitzer oder stumpfer Winkel soll ausgedrückt werden, dass kein überstumpfer Winkel vorhanden sein soll. Die mit einander einen Winkel aufweisenden Flächen gewährleisten eine gute und sichere Fixierung des Werkstücks. An diesen Anlageflächen ist der Werkstückschaft eines aufzunehmenden Werkstücks entlang absenkbar.

Sämtliche drei Anschlagflächen sind derart anzuordnen, dass sie ein Dreieck bilden, welches den eingelegten Werkstückschaft einschliesst. Ein Verrutschen des abgelegten Schaftes ist nur dann gegeben, falls die Haltekraft überwunden wird. Anstelle eines Dreiecks kann auch ein Vieleck gebildet werden.

Vorzugsweise hat jede Aufnahmeeinheit einen zur Klemmeinheit gehörenden Doppelhebel. Der Doppelhebel ist in einem Schwenkgelenk um die Gelenkachse verschwenkbar gelagert. Der Doppelhebel hat zwei Hebelarme. Ein erster Hebelarm hat eine Anlagefläche für einen aufnehmbaren Werkstückschaft, wobei die Anlagefläche gleichzeitig eine Anschlagfläche ist, mit der ein gegen diese bewegter Werkstückschaft die Klemmeinheit gegen die Haltekraft verschwenkt. Ein zweiter Hebelarm ist entsprechend der Haltekraft federbelastet.

Es kann auch eine Messeinheit eingesetzt werden, mit der ein Aufdrückweg der Klemmeinheit durch das aufzunehmende Werkstück bestimmbar ist, um aus demAufdrückweg den Durchmesser des aufgenommenen Werkstückschafts für eine eventuelle Weiterverarbeitung zu ermitteln.

Die Aufnahmeeinheiten der Haltevorrichtung können in einem ebenen Raster mit gleichen Abständen angeordnet werden. Diese Rasteranordnung hat den Vorteil, dass eine einfache Verschiebung in der Bearbeitungsstation durch ein schrittweises Verstellen in einer Ebene in X- und/oder Y-Richtung mit einer Stelleinheit vorgenommen werden kann. Nachteilig ist jedoch, dass in der Bearbeitungsstation unter dem bearbeitenden Werkzeug hindurch verfahren werden muss. Es muss somit nach "hinten" und auch eventuell seitlich ein Freiraum vorhanden sein.

Anstatt eines ebenen Verschiebens in zwei Richtungen kann auch eine Verschiebung in nur einer Richtung (X oder Y) vorgenommen werden. Hierdurch ist der Verschiebeantrieb stark vereinfacht; auch kann je nach Verschieberichtung auf einen Freiraum nach "hinten" verzichtet werden und statt dessen lediglich ein zum Werkzeug ein beidseitiger Freiraum vorgesehen werden.

Bei der Verschiebung muss nicht mit einer linearen Bewegung gearbeitet werden. Die Haltevorrichtung kann auch als Ring ausgebildet werden, wobei dann die Aufnahmeeinheiten mit den Werkzeugen durch die Bearbeitungsstation in einer Drehbewegung geführt werden. Anstelle eines einzigen Ringes können auch mehrere Ringe verwendet werden. Diese Ringe können dann in einer Ebene bewegt werden, wobei auch hier die Frage des Freiraums für gerade nicht benötigte Ringe auftaucht.

Ein gerade abgearbeiteter Ring kann aber auch mit Bezug auf einen noch zu bearbeitenden auf ein anderes Niveau (angehoben oder abgesenkt) gebracht und dann durch eine Linearbewegung z. B. auf Schienen wegbewegt und ausserhalb der Bearbeitungsstation neu bestückt werden.

In der Haltevorrichtung müssen Aufnahmeeinheiten zueinander keine starre Anordnung haben. Die Aufnahmeeinheiten können auch verstellbar, insbesondere aneinander anliegend, angeordnet werden. Die Aufnahmeeinheiten sind dann gelenkig miteinander verbunden. Bei einer gelenkigen Verkupplung können die Gelenke derart ausgebildet sein, dass ein Ein- und Auskuppeln einzelner Aufnahmeeinheiten möglich ist. Analoges gilt bei geringfügig voneinander distanzierten Aufnahmeeinheiten auf einer Transportkette.

Bei einer gelenkigen Verbindung der Aufnahmeeinheiten kann dann die Halteeinheit schlangenartig als z. B. endloses Band ausgebildet sein. Durch die schlangenartige Ausbildung können Warteräume gebildet werden. Auch können in den Aufnahmeeinheiten sitzende Werkstücke derart in die Bearbeitungsstation zum Werkzeug gebracht werden, dass nur ein einziger kleiner Freiraum notwendig ist.

Die schlangenartige Anordnung kann nun in einer Ebene förderbandartig erfolgen. Es kann aber auch eine Anordnung einer in sich geschlossenen Schlaufe gewählt werden, wobei dann die Schlaufe vorzugsweise in einer horizontalen oder vertikalen Ebene liegt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen in
- Fig. 1: eine Draufsicht auf eine Ausführungsvariante einer erfindungsgemässen Haltevorrichtung einer Bearbeitungsvorrichtung mit mehreren Aufnahmeeinheiten,
- Fig. 2: eine Variante zu der in Figur 1 gezeigten Aufnahmeeinheit und
- Fig. 3: eine Haltevorrichtung mit einer schlangenlinienartigen Anordnung der Aufnahmeeinheiten.

### Wege zur Ausführung der Erfindung

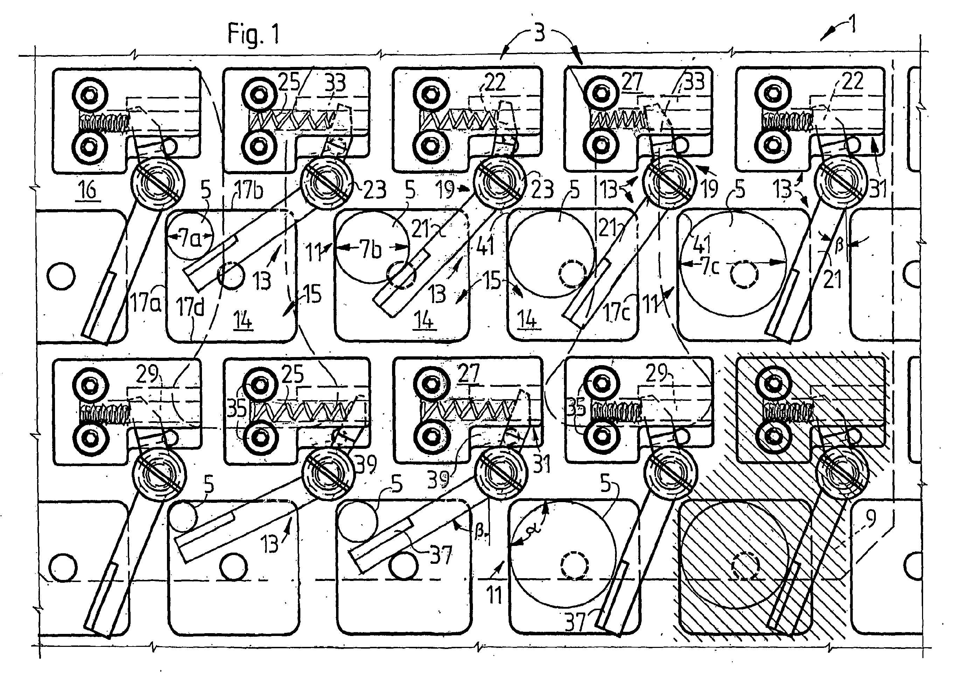

Die in **Figur 1** dargestellte Haltevorrichtung **1** zur Aufnahme von zu schleifenden bzw. geschliffenen Werkstücken hat für die Werkstücke mehrere Aufnahmeeinheiten **3**. Die aufzunehmenden Werkstücke sind in **Figur 1** schematisch nur als Kreise, welche den Querschnitt des Werkstückschafts **5** symbolisieren, dargestellt. In den Aufnahmeeinheiten **3** können Werkstücke mit unterschiedlichen Schaftdurchmessern **7a** bis **7c** fixiert werden. Zur Kennzeichnung der Aufnahmeeinheiten **3** ist eine einzige Aufnahmeeinheit mit dem Bezugszeichen **9** durch eine Schraffur abgedeckt.

Jede Aufnahmeeinheit **3** hat eine Anschlageinheit **11** und eine Klemmeinheit **13**. Jede Klemmeinheit **13** drückt mit einer Haltekraft gegen die Anschlageinheit **11**. Die Anschlageinheit **11** ist, vereinfacht ausgedrückt, als quadratisches Loch **15** in einer Deckplatte **16** mit nach unten gehenden Seitenwänden **17a** und **17b** ausgebildet. Das Loch **15** ist nach unten durch einen Lochboden **14** abgeschlossen. Der jeweilige Werkstückschaft **5** wird durch die Klemmeinheit **13** gegen die Seitenwände **17a** und **17b** gedrückt. Die Seitenwände **17a** und **17b** sind dann Tangentialflächen zu Mantellinien des Werkstückschaftes **5**.

Die Klemmeinheit **13** ist als Doppelhebel **19** mit einem ersten und einem zweiten Hebelarm **21** und **22** ausgebildet. Der Doppelhebel **19** ist schwenkbar mit einem Schwenkgelenk **23** gehalten. Der zweite Hebelarm **22** ist mit einer Druckfeder**25** belastet, welche in einer Federhalterung **27** angeordnet ist. Die Druckfeder **25** liegt in einem Kanal **29** in der Federhalterung **27.** Der Kanal **29** hat einen zum Schwenkgelenk **23** hin offenen Schlitz **31.** In diesem Schlitz **31** ist der an der Druckfeder **25** anliegende Hebelarm **22** bewegbar. Der Schlitz **31** erstreckt sich als Rille **33** über den Kanal **29** hinaus. In dieser Rille **33** verläuft der Endbereich des Hebelarms **22**. Die Federhalterung **27** ist mit zwei Befestigungsschrauben **35a** und **35b** an der Deckplatte **16** befestigt. An diesen Befestigungsschrauben **35a** oder **35b** ist das eine Ende der Druckfeder **25** befestigt. Das andere Ende der Druckfeder **25** drückt auf den Hebelarm **22**.

Jeder Hebelarm **21** des Doppelhebels **19** hat ein vertikal, d.h. annähernd senkrecht zur Oberfläche der Deckplatte **16** verlaufendes Schild **37**. Das Schild **37** steht über die Klemmeinheit **13** nach oben vor und erstreckt sich in das Loch **15** hinein. Der obere Teil des Schildes **37** dient als Anschlagelement zum Öffnen der Klemmeinheit mit einem gegen ihn angefahrenen Werkstückschaft 5 sowie auch als dritte Anlagefläche für den zu fixierenden Werkstückschaft **5**. Das Schild **37** der Klemmeinheit **13** wirkt somit als ein in Richtung gegen die Anschlagflächen **17a** und **17b** der Haltekraft drückbarer Längsbereich.

Die Oberseite der Haltevorrichtung (Palette) **1** ist derart ausgebildet, dass das in einer vorgegebenen Aufnahmeeinheit **3** abzulegende Werkstück auf seinem Weg dorthin möglichst nicht anstösst. Es sind deshalb, ausgenommen die vorstehenden Elemente des Schildes **37**, möglichst keine weiteren vorstehenden Teile vorhanden. Aus der Oberseite der Deckplatte **16** steht deshalb nur der Hebelarm **21** mit der Oberseite des Schwenkgelenks **23** hervor. Der andere Hebelarm **22** ist nach unten abgewinkelt und greift durch eine Öffnung **39** in den Schlitz **31** ein.

Wie oben ausgeführt, weist jede Ausnahmeeinheit **3** ein quadratisches Loch **15** mit den Seitenwänden **17a** bis **17d** auf. Die Seitenwände **17a** und **17b** dienen als Anschlagflächen für einen Schaft **5** eines jeweils abzulegenden Werkstücks. Die Seitenflächen **17a** und **17b** verlaufen vertikal, also senkrecht zur Oberseite der Deckplatte **16** nach unten. In dem hier gezeigten Beispiel stossen die beiden Seitenwände **17a** und **17b** an einer Kante **41** unter einem rechten Winkel α zusammen. Die Kante **41** ist hier aus Herstellungsgründen abgerundet ausgebildet. Ein rechter Winkel α ist in diesem Beispiel gewählt worden, da das Loch **15** quadratisch ausgebildet worden ist. Das Loch **15** muss nicht quadratisch ausgebildet sein; anstelle eines rechten Winkels α können auch andere spitze oder stumpfe Winkel α gewählt werden. Ein überstumpfer Winkel α (180° < α < 360°) sollte möglichst nicht verwendet werden, da dann keine gute Fixierung gegeben ist.

Die Flächen **17c** und **17d** sind lediglich durch die Dicke der Deckplatte **16** gegeben. Nach unten weitergezogene Anschlagflächen sind nicht vorhanden.

Befindet sich kein Werkstückschaft **5** in einer Aufnahmeeinheit **3** ist der Hebel **21** immer in einer definierten Lage. Der Hebel **21** schlägt an der Seitenwand **17a** an, welche somit als Endanschalg wirkt. Zum Ablegen eines Werkstückes in einer vorgegebenen Aufnahmeeinheit **3** wird das Werkstück etwa an den Ort der Kante **41** mit einem Manipulator, Greifer oder Sonstigem in einer Mindesthöhe, welche der vorstehenden Höhe des Schildes **37** bzw. des Schwenkgelenks **23** entspricht, gefahren. Ist der Ort der Kante **41** erreicht, wird auf das Niveau der Oberseite der Deckplatte **16** abgesenkt bis ein einwandfreier Anschlag am Schild **37** gegeben ist. Durch ein Weiterfahren annähernd auf einem Radius zur Achse des Schwenkgelenks **23** wird der Hebelarm **21** maximal so weit aufgeschwenkt bis das Schild **37** an der Fläche **17c** anschlägt oder sich in dessen Nähe befindet. Die Klemmeinheit **13** wird somit durch den anschlagenden Werkstückschaft **5** gegen die Haltekraft der Druckfeder **25** gegenüber der Anschlageinheit **11** zum Einbringen des Werkstückschaftes 5 unter Bildung eines Freiraums distanziert. Anschliessend wird das Werkstück in diesen Freiraum abgesenkt bis das Schaftende sich auf dem Lochboden **14** oder unmittelbar darüber befindet. Der Manipulator gibt nun seine Bewegung frei, worauf die Klemmeinheit den Schaft gegen die beiden Flächen **17a** und **17b** einklemmend fixiert. Das Werkstück ist nun einwandfrei fixiert. Zum Ablegen muss der Durchmesser des Schaftes des anzulegenden Werkstücks nicht bekannt sein.

Da die Ablage mit einem Manipulator, Greifer oder Sonstigem nach einem in der Regel prozessgesteuerten Schleifvorgang erfolgt, ist auch der Durchmesser des Schaftes des abzulegenden Werkstücks bekannt. Ist der Schaftdurchmesser bekannt, muss der Hebelarm **21** der Klemmeinheit **13** nicht immer auf seinen maximalen Aufschwenkwinkel aufgeschwenkt werden, sondern nur auf den notwendigen Aufschwenkwinkel.

Oftmals werden an ein und demselben Werkstück mehrere Schleiffvorgänge nach einander vorgenommen. D.h. aus bereits mit Werkstücken bestückten Paletten, welche Werkstücke mit unterschiedlichen Schaftdurchmessern aufweisen, müssen die Werkstücke automatisch entnommen werden. Um die einzelnen Werkstücke gut greifen zu können, ist es von Vorteil, wenn der betreffende Schaftdurchmesser bekannt ist. Der Schaftdurchmesser jedes in einer Aufnahmeeinheit abgelegten Werkstücks kann durch einen Sensor ermittelt werden, der einen Aufschwenkwinkel β des Hebelarms **21** z. B. mit einer Parallelen zur Seitenwand **17a** ermittelt. Auch kann von der tatsächlichen Druckkraft der Druckfeder **25** auf den Öffnungswinkel β geschlossen werden.

Die Sensoren jeder Aufnahmeeinheit **3** sind dann mit einer Auswerteeinheit verbunden, welche ihrerseits mit der, z. B. CNC-gesteuerten, Schleifmaschine zusammenarbeitet.

Anstatt die Klemmeinheit **13** mit einer annähernd radialen Bewegung zur Achse des Schwenkgelenks **23** zu öffnen, können auch oberhalb der Seitenwände **17a** und **17b** sowie am Schild **37** nach aussen geneigte Einlaufteilflächen vorgesehen werden. Der Schaft eines abzulegenden Werkstücks wird dann lediglich in die einen Trichter bildenden Einlaufflächen eingedrückt, worauf sich der Hebelarm **21** der Klemmeinheit **13** öffnet.

Die Klemmeinheit kann auch als elastisch verformbares Element ausgebildet werden. Als elastisch verformbares Element kann z.B. ein Streifen aus Federstahl verwendet werden, der am einen Ende gehalten und dessen anderes Ende in einer Längsführung verschiebbar ist. Der Werkzeugschaft wird dann seitlich gegen das Element gedrückt, wodurch dieses "ausgebeult" wird. Anschliessend wird der Werkstückschaft entlang der "Ausbeulung" eingeschoben.

Die Anschlageinheit **11** weist, wie oben ausgeführt, zwei unter einem spitzen oder stumpfen Winkel α zusammenlaufende Anschlagflächen **17a** und **17b** für den jeweiligen Werkstückschaft **5** auf. Es kann aber auch die Klemmeinheit derart ausgebildet werden, dass sie statt des einen Schildes **37** zwei unter einem spitzen oder stumpfen Winkel zusammenlaufende Anschlagflächen (abgewinkelter Hebelarm) hat, welche dann zu einer Mantellinie des einzulegenden Werkstückschafts parallel verlaufen. Die beiden Anschlagflächen **17a** und **17b** können bestehen bleiben oder durch eine einzige Fläche ersetzt werden. Alle drei Flächen müssen ein geschlossenes Dreieck bei eingelegtem Werkstückschaft bilden.

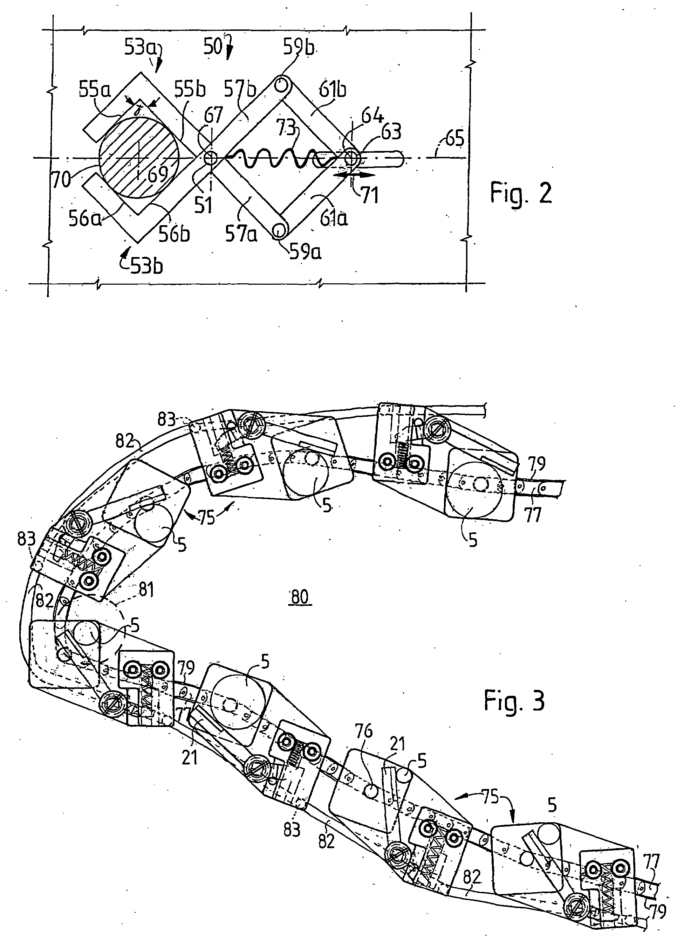

Anstatt die Aufnahmeeinheit 3 mit zwei feststehenden Seitenflächen **17a** und **17b** und einem bewegten Hebelarm **21** der Klemmeinheit **13** auszubilden, kann auch, wie in **Figur 2** dargestellt, analog zum oben erwähnten abgewinkelten Hebelarm, eine scherenartige Ausbildung von Aufnahmeeinheiten **50** einer Haltevorrichtung zur Aufnahme von zu schleifenden bzw. geschliffenen Werkstücken vorgenommen werden.

Die Aufnahmeeinheit **50** hat zwei mit einem einzigen Schwenkgelenk **51** verschwenkbar gehaltene Scherenbacken **53a** und **53b**. Jede der Scherenbacken **53a** und **53b** hat zwei Anlageflächen **55a** und **55b** bzw. **56a** und **56b,** welche miteinander einen spitzen oder stumpfen aber keinen überstumpfen Winkel γ einschliessen. In rückwärtiger Verlängerung jeder Anlagefläche **55b** und **56b** ist ein Flansch **57a** bzw. **57b** vorhanden. Beide Flansche **57a** und **57b** sind gleich lang und weisen jeweils in ihrem freien Endbereich ein Schwenkgelenk **59a** bzw. **59b** auf. An jedem Schwenkgelenk **59a** bzw. **59b** ist je eine Lasche **61a** und **61b** verschwenkbar angeordnet. Die Laschen **61a** und **61b** sind gleich lang ausgebildet. Die dem Schwenkgelenk **59a** bzw. **59b** abgewandten Enden der Laschen **61a** und **61b** sind in einem weiteren Gelenk **63** miteinander verbunden. Eine Achse **64** des Gelenks **63** liegt verschiebbar auf einer Geraden **65**, die durch eine Achse **67** des Schwenkgelenks **51** und den Mittelpunkt **69** eines Schaftes **70** eines jeweils aufzunehmenden geschliffenen bzw. zu schleifenden Werkstücks geht. Die Verschiebbarkeit des Gelenks **63** ist durch den Doppelpfeil **71** angedeutet. Zwischen dem Schwenkgelenk **51** und dem Gelenk **63** ist eine Druckfeder **73** angeordnet, welche eine Schliesskraft auf die beiden Scherenbacken **53a** und **53b** ausübt.

Vorzugsweise wird man die Scherenbacken **53a** und **53b** mit trichterartigen Einlaufelementen ausbilden, durch die der Werkstückschaft zum Scherenöffnen eingeschoben wird. Vorteil einer Aufnahmeeinheit **50** mit diesen Scherenbacken **53a** und **53b** ist eine automatische Zentrierung des Werkstückschaftes **70**.

Anstelle eines trichterartigen Einlaufs kann auch eine der Scherenbacken **53a** oder **53b** mit einem Anschlag versehen werden. Der Anschlagort wird derart gewählt, dass der Abstand der betreffenden Anschlagfläche einem minimalen Radius eines zu fixierenden Werkstückschaftes **70** minus einen zum Halten notwendigen Federweg der Druckfeder **73** entspricht. Die andere Scherenbacke **53b** bzw. **53a** hat dann einen vorstehenden Verschiebeanschlag, an dem der mit einem Manipulator bewegte Werkzeugschaft **70** zum Öffnen der Scherenbacken **53a** und **53b** angeschlagen wird. Sind die Scherenbacken **53a** und **53b** ausreichend geöffnet, wird der Werkstückschaft **70** abgesenkt.

Wie bereits erwähnt, muß die Haltevorrichtung **1** nicht als plattenartige Palette, wie in **Figur 1** dargestellt, ausgebildet sein. Von den eingangs erwähnten Ausführungsvarianten von Haltevorrichtungen zeigt **Figur 3** eine Ausführungsvariante, bei der die zu den Aufnahmeeinheiten **3** analog ausgebildeten Aufnahmeeinheiten **75** auf einer nahezu beliebigen Transportbahn, auch schlangenlinienartig befördert werden können. Sämtliche Aufnahmeeinheiten **75** sind über einen an ihrer Unterseite angeordneten Mitnehmer **76** an einer Transportkette **77** gehalten. Die Transportkette **77** wird in einer Ausnehmung **79** in einer Haltevorrichtung **80** geführt. Damit die einzelnen Aufnahmeeinheiten **75** eine vorgegebene Lage einnehmen können, in der das zu schleifende Werkstück in einer Bearbeitungsstation **81** sich in der richtigen Bearbeitungslage befindet, ist eine Führungsnut **82** vorhanden, in die ein an der Unterseite der Aufnahmeeinheit **75** angeordneter Stift **83** greift.

Vorteil einer derartigen Ausbildung der Haltevorrichtung **80** ist, dass eine Bestückung in einer von der Bearbeitungsstation **81** entfernten Bestückungsstation kontinuierlich vorgenommen werden kann. Auch kann eine Entladestation distanziert von der Bestückungsstation angeordnet sein. Auf die in **Figur 3** gezeigte Führungsnut kann über grosse Wegbereich verzichtet werden, da für den reinen Transport die Lage der Aufnahmeeinheiten **75** uninteressant ist. Es muss lediglich in der Bearbeitungs-, Entladeund Bestückungsstation eine vorgegebene Lage vorhanden sein.

Wird grösstenteils auf die Führungsnut **82** verzichtet, kann der Stift **83** derart federnd gelagert werden, dass er gegen die Oberseite der Haltevorrichtung **80** leicht drückt. Vor den Bearbeitungs-, Entlade- und Bestückungsstation kann dann jeweils ein trichterförmiger Einlauf in eine Führungsnut vorgesehen werden; die betreffende Aufnahmeeinheit **75** ist dann im Bereich der Station in einer vorgegebenen Lage. Da der Stift **83** nicht auf die andere Seite der Transportkette **77** gelangen kann, sofern diese geringfügig über die Haltevorrichtungsoberseite hervorsteht, ist der Einlauf einfach auszuführen.

Anstatt eine Transportkette zu verwenden, können die Aufnahmeeinheiten auch gelenkig miteinander verbunden werden; es ist dann nur noch eine einzige Führungsnut notwendig.

## Patentansprüche

1. Bearbeitungsvorrichtung für zu schleifende Werkstücke mit einer Bearbeitungsstation sowie mit einer Haltevorrichtung mit mehreren Aufnahmeeinheiten **(3; 50)** zur Aufnahme von zu schleifenden bzw. geschliffenen Werkstücken, welche jeweils einen Werkstückschaft **(5; 70)** aufweisen, und zum Transport der Werkstücke von und zur Bearbeitungsstation, sowie einer Stelleinheit, mit der die Aufnahmeeinheiten der Haltevorrichtung in eine Bearbeitungslage in der Bearbeitungsstation hinein und heraus bringbar sind, **dadurch gekennzeichnet, dass** jede Aufnahmeeinheit **(3; 50)** eine Anschlageinheit **(11; 53a)** und eine Klemmeinheit **(13; 53b)** hat, und Werkstückschäfte **(5; 70)** mit unterschiedlichen Durchmesserwerten **(7a-c)** in der Vorrichtung **(1)** aufnehmbar sind, wobei jeweils ein Werkstückschaft **(5; 70)** zwischen eine Anschlageinheit **(11; 53a)** und eine Klemmeinheit **(13; 53b)** einer Aufnahmeeinheit **(3; 50)** einbringbar ist, und jede Klemmeinheit **(13; 53b)** unabhängig von den Klemmeinheiten **(13; 53b)** der restlichen Aufnahmeeinheiten **(3; 50)** gegen die Anschlageinheit **(11; 53a)**, den Werkstückschaft **(5; 70)** fixierend, mit einer Haltekraft drückbar ist.

2. Haltevorrichtung **(1)**, insbesondere der Bearbeitungsvorrichtung nach Anspruch 1, mit mehreren Aufnahmeeinheiten **(3; 50)** zur Aufnahme von zu schleifenden bzw. geschliffenen Werkstücken, welche jeweils einen Werkstückschaft **(5; 70)** aufweisen, **dadurch gekennzeichnet, dass** jede Aufnahmeeinheit **(3; 50)** eine Anschlageinheit **(11; 53a)** und eine Klemmeinheit **(13; 53b)** hat, und Werkstückschäfte **(5; 70)** mit unterschiedlichen Durchmesserwerten **(7a-c)** in der Vorrichtung **(1)** aufnehmbar sind, wobei jeweils ein Werkstückschaft **(5; 70)** zwischen eine Anschlageinheit **(11; 53a)** und eine Klemmeinheit **(13; 53b)** einer Aufnahmeeinheit **(3; 50)** einbringbar ist, und jede Klemmeinheit **(13; 53b)** unabhängig von den Klemmeinheiten **(13; 53b)** der restlichen Aufnahmeeinheiten **(3; 50)** gegen die Anschlageinheit **(11; 53a)**, den Werkstückschaft **(5; 70)** fixierend, mit einer Haltekraft drückbar ist.

3. Haltevorrichtung **(1)** nach Anspruch 2, **dadurch gekennzeichnet, dass** die Klemmeinheit **(13)** einen in Richtung gegen das Anschlagelement **(11)** mit der Haltekraft drückbaren Längsbereich **(37)** hat.

4. Haltevorrichtung **(1)** nach Anspruch 2 oder 3, **dadurch gekennzeichnet, dass** die Klemmeinheit **(13; 53b)** einen vorstehenden, insbesondere einen nach oben vorstehenden; Verschiebeanschlag **(37)** hat, mit dem die Klemmeinheit **(13; 53b)** durch einen anschlagenden Werkstückschaft **(5; 70)** gegen die Haltekraft gegenüber der Anschlageinheit **(11; 53a)** zum Einbringen des Werkstückschaftes **(5; 70)** einen Freiraum bildend distanzierbar ist und insbesondere dann bei distanzierter Klemmeinheit **(13; 53b)** dieser Werkstückschaft **(5; 70)** in den Freiraum einschiebbar ist.

5. Haltevorrichtung nach einem der Ansprüche 2 bis 4, **gekennzeichnet durch** einen sich von aussen nach innen verjüngenden Einlaufbereich an der Anschlagund/oder der Klemmeinheit, damit ein von aussen in die Aufnahmeeinheit einzubringender Werkstückschaft die Klemmeinheit gegenüber der Anschlageinheit aufdrücken kann.

6. Haltevorrichtung **(1)** nach einem der Ansprüche 2 bis 5, **dadurch gekennzeichnet, dass** die Klemmeinheit **(13; 53b)** und/oder die Anschlageinheit **(11; 53a)** zwei zu einer Mantellinie des einzulegenden Werkstückschaftes **(5; 70)** parallele, miteinander einen spitzen oder stumpfen Winkel **(α; Y)** einschliessende Anlageflächen **(17a, 17b; 55a/b, 56a/b)** hat, und vorzugsweise der Werkstückschaft **(5; 70)** eines aufzunehmenden Werkstücks an den Anlageflächen **(17a, 17b, 37; 55a/b, 56a/b)** entlang absenkbar ist und insbesondere sämtliche Anschlagflächen **(17a, 17b, 37)** ein Vieleck, insbesondere ein Dreieck, bilden, welches den eingelegten Werkstückschaft **(5; 70)** einschliesst.

7. Haltevorrichtung **(1)** nach einem der Ansprüche 2 bis 6, **gekennzeichnet durch** einen Endanschlag **(17a)**, einen zur Klemmeinheit **(13)** gehörenden, in einem Schwenkgelenk **(23)**, verschwenkbaren Doppelhebel **(19)** mit zwei Hebelarmen **(21, 22)**, wobei ein erster Hebelarm **(21)** wenigstens eine Anlagefläche **(37)** für einen aufnehmbaren Werkstückschaft **(5)** aufweist, ein zweiter Hebelarm **(22)** entsprechend der Haltekraft, vorzugsweise mit einer Druckfeder **(25)**, federbelastet ist.

8. Haltevorrichtung **(1)** nach einem der Ansprüche 2 bis 7, **gekennzeichnet durch** eine Messeinheit, mit der ein Aufdrückweg der Klemmeinheit **durch** das aufzunehmende Werkstück bestimmbar ist, um aus dem Aufdrückweg den Durchmesser des aufgenommenen Werkstückschaftes für eine eventuelle Weiterverarbeitung zu ermitteln.

9. Haltevorrichtung nach einem der Ansprüche 2 bis 8, **dadurch gekennzeichnet, dass** die Aufnahmeeinheiten in einem vorgegebenen Raster, insbesondere in einer Anordnung auf einem vorgegebenen Kurvenverlauf angeordnet sind, wobei der Kurvenverlauf vorzugsweise eine Gerade, insbesondere wenigstens ein Kreis oder wenigstens ein Kreisteilstück ist.

10. Haltevorrichtung nach einem der Ansprüche 2 bis 8, **dadurch gekennzeichnet, dass** die Aufnahmeeinheiten aneinander anschließend angeordnet sind und jede Aufnahmeeinheit gegenüber der benachbarten räumlich verstellbar ist, um vorzugsweise eine "schlangenartige" offene, oder in besonderer Weise in sich geschlossene Aneinanderreihung, insbesondere eine schlaufenartige Aneinanderreihung zu erreichen, damit vor allem eine Bestückung distanziert von der Bearbeitungsstation der Bearbeitungsvorrichtung vornehmbar ist.
